# FASCICULE DE BREVET EUROPEEN

(11) **EP 1 443 310 B1**
(45) Date de publication et mention de la délivrance du brevet: **09.05.2012**
(21) Numéro de dépôt: 04364004.4
(22) Date de dépôt: 27.01.2004
(51) Int. Cl.: G01C 21/36, G01S 5/14

(54) **Procédé et système de guidage géographique de l'utilisateur d'un véhicule**
Verfahren und Vorrichung zur geographischen Führung des Benutzers eines Fahrzeuges
Method and device for geographically guiding the user of a vehicle

(30) Priorité: 31.01.2003 FR 0301107
(43) Date de publication de la demande: 04.08.2004
(73) Titulaire: FRANCE TELECOM, 75015 Paris (FR)
(72) Inventeur: Missul, Sonia, 35700 Rennes (FR); Magret, Jean-Michel, 35235 Thorigne Fouillard (FR); Perrault, Olivier, 35530 Noyal sur Vilaine (FR)
(74) Mandataire: Joly, Jean-Jacques

(56) Documents cités:
- EP-A- 1 103 787
- US-A- 5 177 685
- US-A1- 2001 020 211
- US-A1- 2001 029 425

## Description

L'invention concerne un procédé et un système de guidage géographique de l'utilisateur d'un véhicule.

Un domaine d'application de l'invention concerne le guidage à distance de l'utilisateur à bord du véhicule à l'aide d'informations envoyées à un terminal prévu à bord du véhicule et restituées de manière sonore ou autre.

A cet égard, on connaît un système de guidage fournissant une feuille de route statique décrivant l'itinéraire que doit emprunter l'utilisateur d'un point de départ à un point d'arrivée fournis au préalable au système.

La feuille de route statique présente l'inconvénient d'être difficile à consulter ou à mémoriser pendant le parcours de l'itinéraire.

En effet, si les informations de guidage sont restituées par écrit, leur consultation pendant le parcours est malaisée, voire dangereuse en conduisant, et si les informations de guidage sont vocales, l'utilisateur ne pourra que difficilement se souvenir de la totalité de celles-ci. En outre, il n'est pas possible ou difficile de mettre à jour la feuille de route pendant le parcours de l'itinéraire.

Un autre système connu prévoit de guider pas à pas l'utilisateur en lui fournissant une indication de chaque changement futur de direction à faire effectuer au véhicule pour lui faire suivre l'itinéraire prévu. Ce guidage pas à pas nécessite l'utilisation d'un terminal de visualisation à bord du véhicule et d'un système de géolocalisation précis tel que le système GPS, qui sont compliqués et coûteux à réaliser.

Enfin les systèmes à capteurs de position intégrés sont décrits dans le document US 5 177 685.

L'invention vise à obtenir un procédé et un système de guidage géographique de l'utilisateur d'un véhicule, qui pallie les inconvénients de l'état de la technique et qui soit facile à mettre en oeuvre et à utiliser.

A cet effet, un premier objet de l'invention est un procédé de guidage géographique de l'utilisateur d'un véhicule, dans lequel :
- on spécifie à partir d'un terminal de communication mobile, situé à bord du véhicule, une information de lieu de destination du véhicule,
- on détermine au moins une localisation de départ du terminal de télécommunication mobile,
- on calcule un itinéraire prévu du véhicule de la localisation de départ au lieu de destination à partir d'une base de données géographiques,
- on restitue à l'utilisateur sur le terminal de communication mobile au moins un message de guidage géographique généré au moins à partir de l'itinéraire calculé,
caractérisé en ce que, dans un calculateur distant communiquant avec le terminal de télécommunication mobile :
- l'on détecte si le temps écoulé depuis un instant calculé de détermination de localisation atteint une valeur temporelle prédéterminée de comparaison,
- en cas de détection de la valeur temporelle prédéterminée de comparaison, on détermine une nouvelle localisation du véhicule dépendant de la valeur temporelle prédéterminée de comparaison, de l'itinéraire calculé et de la dernière localisation déterminée,
- on génère pour envoi au terminal de communication mobile, à partir de l'itinéraire calculé et de la nouvelle localisation déterminée, le message de guidage contenant au moins une information de guidage relative à une portion de l'itinéraire calculé, allant de la nouvelle localisation à au moins une position intermédiaire entre ladite nouvelle localisation et le lieu de destination.

Grâce à l'invention, l'utilisateur ne reçoit que les informations concernant la partie de son itinéraire située après sa position actuelle entre le lieu de départ et le lieu d'arrivée spécifiés, c'est-à-dire seulement l'information dont il a besoin. L'utilisateur reçoit ainsi tout au long du parcours un message ou plusieurs messages se succédant, contenant une quantité d'information limitée et adaptée à sa position géographique actuelle, ce qui évite les informations superflues. En outre, l'invention permet de se dispenser de devoir effectuer une géolocalisation précise pour générer le message de guidage ainsi envoyé.

L'invention permet ainsi d'améliorer le service rendu à l'utilisateur par rapport à un simple calcul d'itinéraire avec génération d'une feuille de route et d'obtenir un guidage de l'utilisateur, qui est techniquement simple à mettre en oeuvre. L'invention peut ainsi être utilisée comme service supplémentaire d'un terminal mobile et permet ainsi d'enrichir la gamme de services offerte à l'utilisateur.

Suivant d'autres caractéristiques de l'invention :
- la valeur temporelle de comparaison est une valeur fixe prédéterminée ;
- la nouvelle localisation est déterminée en effectuant une estimation de la distance parcourue pendant la valeur temporelle prédéterminée de comparaison sur l'itinéraire calculé à partir de la dernière localisation déterminée ;
- ladite distance parcourue est déterminée en utilisant une estimation de vitesse obtenue par interrogation, dans une base de données associant des vitesses à des axes routiers, de l'axe routier sur lequel on détermine que se trouve la dernière localisation déterminée ;
- ou la valeur temporelle de comparaison est égale au quotient d'une valeur de distance fixe prédéterminée par une valeur de vitesse prédéterminée en fonction de la dernière localisation ;
- ladite valeur de vitesse est obtenue par interrogation, dans une base de données associant des vitesses à des axes routiers, de l'axe routier sur lequel on détermine que se trouve la dernière localisation déterminée ;
- ou l'on détermine une localisation par acquisition physique de la position géographique réelle du terminal de télécommunication mobile, on sélectionne dans une base de données, associant à des localisations des points-clés à chacun desquels est associée une valeur temporelle de point-clé, les points-clés se trouvant sur l'itinéraire calculé, on recherche si ladite localisation acquise correspond à un point-clé sélectionné dans la base de données de points-clés, et dans l'affirmative, on prédétermine la valeur temporelle de comparaison comme étant égale à ladite valeur temporelle de point-clé associée au point-clé correspondant, l'instant de détermination de localisation comme étant égal à l'instant d'acquisition physique de la position géographique réelle du terminal et on prédétermine la nouvelle localisation comme étant égale au point-clé associé ;
- les valeurs temporelles de point-clé sont des temps estimés de parcours d'un véhicule allant de la localisation L associée au point-clé associé, qui sont déterminés au préalable ;
- l'on sélectionne les informations de guidage générées à envoyer au terminal de télécommunication mobile ;
- pour sélectionner les informations de guidage générées à envoyer au terminal de télécommunication mobile, on compare l'itinéraire calculé à la nouvelle localisation déterminée pour éliminer les informations de guidage correspondantes générées ne signalant aucune bifurcation à effectuer ;
- la nouvelle localisation est déterminée à la fois par les trois modes de détermination décrits ci-dessus ;
- ou la valeur temporelle ou de distance prédéterminée ou des points-clés sont prescrits à partir du terminal de télécommunication mobile ;
- la valeur temporelle ou de distance prédéterminée ou des points-clés sont prescrits par défaut en fonction d'un type d'itinéraire choisi par l'utilisateur sur le terminal de communication mobile et/ou du lieu de destination et/ou de départ déterminé ;
- plusieurs valeurs temporelles de comparaison successives associées à plusieurs nouvelles localisations successives et plusieurs informations de guidage successives sont prescrites par défaut en fonction de l'itinéraire calculé ;
- la valeur temporelle ou de distance prédéterminée ou des points-clés sont prescrits au préalable par l'utilisateur sur un site Internet de paramétrage du service ;
- la valeur temporelle ou de distance prédéterminée ou des points-clés sont prescrits au préalable par l'utilisateur sur un serveur vocal interactif ;
- on prévoit une fonction de choix par le terminal de télécommunication mobile du mode de détermination de la nouvelle localisation parmi les modes de détermination décrits ci-dessus ;
- l'information de guidage correspond à une portion de l'itinéraire calculé d'une longueur sensiblement égale à une valeur de vitesse estimée du véhicule multipliée par la valeur temporelle prédéterminée de comparaison, associée à la nouvelle localisation, ladite vitesse estimée étant obtenue par interrogation, dans une base de données associant des vitesses à des axes routiers, de l'axe routier sur lequel on détermine que se trouve la dernière localisation déterminée ;
- on génère en outre un autre message de guidage pour ledit envoi au terminal de télécommunication mobile, à partir de l'itinéraire calculé et d'une nouvelle localisation du véhicule, obtenue par acquisition de la position géographique réelle du terminal de télécommunication mobile ;
- le terminal de télécommunication mobile est un terminal téléphonique cellulaire, et l'acquisition physique de la position géographique réelle du terminal de télécommunication mobile est effectuée par identification de la cellule du réseau cellulaire dans laquelle se trouve le terminal de télécommunication mobile ;
- on génère en outre un autre message de guidage pour ledit envoi au terminal de télécommunication mobile, à partir d'une nouvelle localisation du véhicule, obtenue à partir de la réponse de l'utilisateur sur le terminal de télécommunication mobile à un message d'interrogation de position émis depuis le calculateur ;
- le terminal de télécommunication mobile est un terminal téléphonique mobile ;
- le terminal de télécommunication mobile est un terminal téléphonique mobile du type GPRS ;
- le message de guidage est restitué vocalement sur le terminal de télécommunication mobile ;
- le message de guidage est restitué visuellement sur le terminal de télécommunication mobile.

Un deuxième objet de l'invention est un système de guidage géographique de l'utilisateur d'un véhicule, pour la mise en oeuvre du procédé de guidage selon l'une quelconque des revendications précédentes, le système de guidage comprenant :
- un moyen de réception d'une information de lieu de destination du véhicule spécifiée à partir du terminal de télécommunication mobile situé à bord du véhicule,
- un moyen de détermination d'au moins une localisation de départ du terminal de télécommunication mobile,
- un moyen de calcul d'un itinéraire prévu du véhicule de la localisation de départ au lieu de destination, à partir d'une base de données géographiques,
- un moyen de génération d'au moins un message de guidage géographique sur le terminal de télécommunication mobile,
caractérisé en ce qu'il comporte, dans un calculateur distant communiquant avec le terminal de télécommunication mobile :
- un moyen pour détecter si le temps écoulé depuis un instant calculé de détermination de localisation atteint une valeur temporelle prédéterminée de comparaison,
- un moyen de détermination, en cas de détection de ladite valeur temporelle prédéterminée de comparaison, d'une nouvelle localisation du véhicule dépendant de la valeur temporelle prédéterminée de comparaison, de l'itinéraire calculé et de la dernière localisation déterminée,
- le moyen de génération étant tel qu'il génère, pour envoi au terminal de communication mobile, à partir de l'itinéraire calculé et de la nouvelle localisation déterminée, le message de guidage contenant au moins une information de guidage relative à une portion de l'itinéraire calculé, allant de la nouvelle localisation à au moins une position intermédiaire entre ladite nouvelle localisation et le lieu de destination.

L'invention sera mieux comprise à la lumière de la description qui va suivre, donnée uniquement à titre d'exemple non limitatif en référence aux dessins annexés sur lesquels :

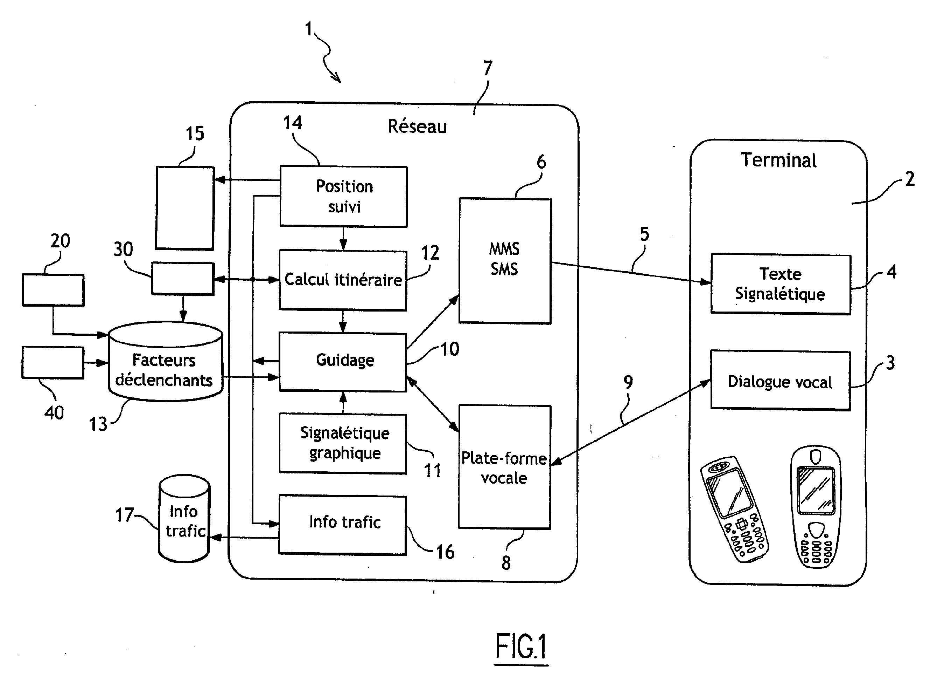

- la **figure 1** est un synoptique modulaire du système de guidage suivant l'invention ;
- la **figure 2** est un organigramme du procédé de guidage suivant l'invention ;
- la **figure 3** représente schématiquement une base de données d'utilisateur du système et du procédé de guidage suivant l'invention ;
- la **figure 4** est une base de données de points clés utilisés dans le système et le procédé de guidage suivant l'invention ; et
- la **figure 5** est un schéma montrant un itinéraire obtenu par le système et le procédé de guidage suivant l'invention.

Le procédé et le dispositif 1 de guidage suivant l'invention sont mis en oeuvre à l'aide d'un terminal 2 téléphonique de télécommunication mobile, tel qu'un téléphone portable cellulaire sans fil. Une inscription au service de guidage n'est pas obligatoire. Dans ce cas, l'utilisateur devra s'identifier et s'authentifier pour accéder au service.

Ce terminal 2 est disposé à l'intérieur d'un véhicule par exemple automobile tel qu'une voiture de tourisme ou autre, de telle sorte qu'il puisse être utilisé par une personne située à l'intérieur du véhicule telle que par exemple le conducteur de celle-ci. Le terminal 2 est par exemple un téléphone mobile mains libres disposé sur un reposoir fixé au tableau de bord du véhicule à proximité du siège de l'utilisateur, de telle sorte que ce dernier ne soit pas obligé de le tenir.

Le terminal 2 comporte des moyens 3 pour établir un dialogue vocal avec l'utilisateur, comportant par exemple un haut-parleur et un microphone, et des moyens 4 de présentation de données, par exemple sous la forme d'un écran d'affichage de texte ou de signalétique. Les moyens 3 et/ou 4 sont personnalisables par l'utilisateur à partir de son terminal 2. Les moyens 3 et 4 peuvent être soit intégrés au terminal 2, soit lui être rajoutés.

Les moyens 4 de présentation de données sont aptes à recevoir, par l'intermédiaire d'une liaison 5 de données sans fil, des données provenant d'un module 6 de fourniture de messages MMS (Multimedia Messaging Service), c'est-à-dire du type image, ou SMS (Short Messaging Service), c'est-à-dire du type message abrégé, d'un calculateur 7 relié au réseau de télécommunication mobile. De même, les moyens 3 de dialogue vocal sont aptes à émettre et recevoir des messages ou informations vocales vers et depuis une plate-forme vocale ou serveur vocal interactif 8 du calculateur 7 fixe du réseau par l'intermédiaire d'une liaison 9 vocale sans fil. Le réseau est un réseau cellulaire de téléphonie sans fil, par exemple du type GSM, GPRS ou UMTS. La plate-forme vocale 8 comporte par exemple une fonction de reconnaissance vocale des informations émises depuis le module 3 de dialogue vocal ainsi qu'une fonction de synthèse vocale d'informations à restituer par les moyens 3 de dialogue vocal.

Le module 6 de fourniture de messages et la plate-forme vocale 8 sont alimentés en messages ou informations de guidage par un module 10 de guidage. Des informations de signalétique graphique produites par un module 11 peuvent être ajoutées aux informations ou aux messages de guidage du module 10 pour restitution par les moyens 4 de fourniture de données du terminal 2 par l'intermédiaire de la liaison 5 et du module 6.

Les informations ou messages de guidage sont calculés par le module 10 de guidage à partir d'informations d'itinéraire fournies par un moteur 12 de calcul d'itinéraire, apte à fournir un itinéraire géographique, par exemple du type routier, à partir d'un point de départ et d'un point d'arrivée qui lui sont spécifiés. Un module 13 de déclenchement est également relié au module 10 de guidage pour déterminer l'information ou le message de guidage qui doit être généré par le module 10 en fonction des informations d'itinéraire fournies par le moteur 12 et l'instant où le message ou information ainsi déterminé doit être transmis au module 6 ou 8 pour envoi au terminal 2.

En outre, il peut être prévu de manière optionnelle un module 14 d'acquisition de la position géographique réelle du terminal 2, ou de géolocalisation, grâce, dans l'exemple décrit, à un module 15 d'identification de la cellule du réseau cellulaire dans laquelle se trouve le terminal 2. Plusieurs systèmes de localisation ayant des degrés de précision différents peuvent être utilisées pour réaliser le module 14. Il peut également être prévu en option un module 16 de calcul d'informations de trafic pour enregistrement dans une base 17 d'informations de trafic pouvant être interrogée à des fins statistiques ou de fourniture d'informations de circulation en temps réel à des utilisateurs. Le moteur 12 calcule l'itinéraire par exemple également en fonction des informations de trafic présentes dans la base 17.

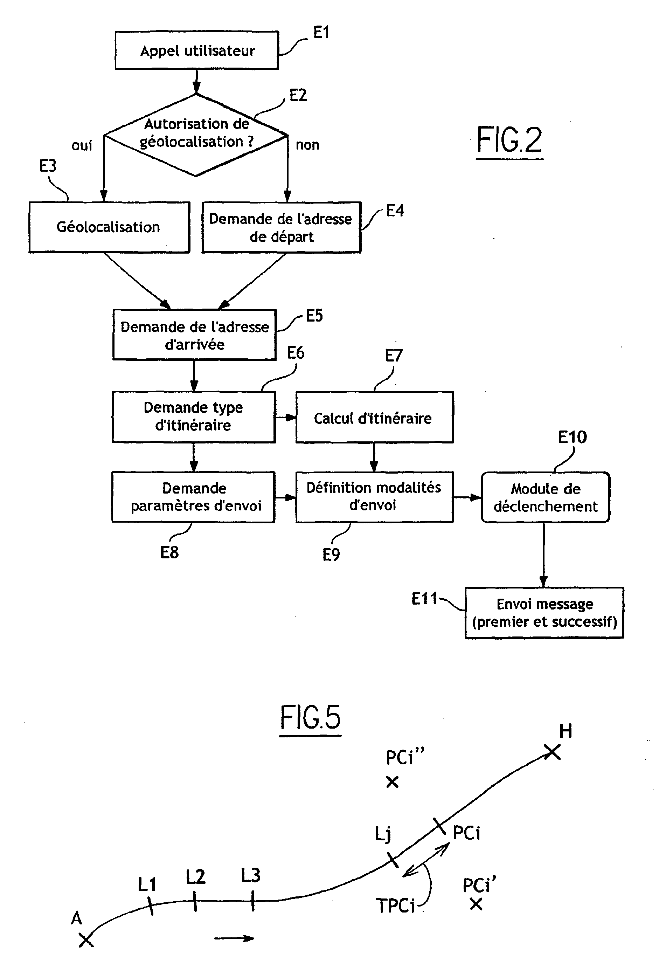

Le fonctionnement du dispositif de guidage est expliqué ci-dessous en référence à la figure 2.

Au cours d'une étape initiale E1, l'utilisateur fait appel par son terminal 2 au service de guidage par les liaisons 5 ou 9 pour établir une communication avec le calculateur 7.

Le calculateur 7 demande ensuite à l'étape E2 par le module 6 ou le module 8 sur le terminal 2 à l'utilisateur si celui-ci souhaite effectuer une géolocalisation de son terminal 2.

Dans l'affirmative après l'étape E2, il est effectué une géolocalisation à l'étape E3 par le module 14, qui transmet alors les informations de localisation correspondantes au moteur 12 de calcul d'itinéraire et au module 16 de calcul d'information de trafic lorsqu'il est prévu. Dans la négative après l'étape E2, il est demandé au cours de l'étape E4 au terminal 2 l'adresse ou la localisation de départ du terminal 2, c'est-à-dire du véhicule. L'utilisateur fournit alors lui-même par les moyens 3 et/ou 4 sur son terminal 2 l'information de localisation de départ, qui est alors retransmise au calculateur 7.

Après l'étape E3 ou E4, le calculateur 7 demande lors de l'étape E5 au terminal 2 l'adresse d'arrivée ou l'information de lieu de destination du terminal 2, c'est-à-dire du véhicule. L'utilisateur fournit alors lui-même par les moyens 3 et/ou 4 sur son terminal 2 l'information de lieu de destination, qui est alors retransmise au calculateur 7. L'utilisateur peut éventuellement fournir l'information de lieu de destination à partir d'une adresse du répertoire de son terminal 2. Bien entendu, l'étape E5 de détermination de lieu de destination peut précéder l'étape E2.

Le calculateur 7 demande ensuite au cours de l'étape E6 au terminal 2 le type d'itinéraire qu'il souhaite, par exemple l'itinéraire le plus rapide, l'itinéraire le plus court ou l'itinéraire sans péage autoroutier ou autre. Lorsque le type d'itinéraire a été choisi et a été fourni au calculateur 7, il est passé d'une part à l'étape E7 et d'autre part à l'étape E8.

Au cours de l'étape E7, le moteur 12 calcule un itinéraire à partir du type d'itinéraire sélectionné au cours de l'étape E6, de l'information de lieu de destination spécifiée et de la localisation de départ déterminée ou de la géolocalisation.

Au cours de l'étape E8, le calculateur demande au terminal 2 de choisir des paramètres d'envoi de l'information de guidage.

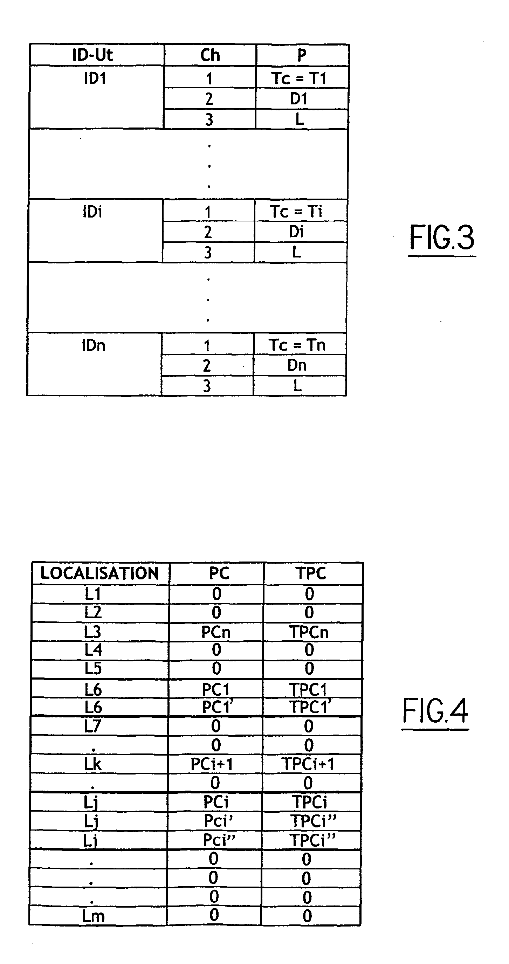

Ainsi que représenté à la figure 3, chaque utilisateur, correspondant à chaque terminal 2, est identifié dans une base de données 20 par un identifiant ID-Ut qui peut être par exemple le numéro de téléphone du terminal 2. A chaque identifiant d'utilisateur ID1, ..., IDi, ..., IDn sont associés des paramètres Ch d'envoi égaux à 1, 2 et 3. Le calculateur 7 demande à l'utilisateur ayant l'identifiant IDi de la base 20, qui est celui ayant établi la communication lors de l'étape initiale E1, de choisir parmi les valeurs 1, 2 ou 3 du paramètre Ch associé. Le choix effectué sur le terminal 2 par l'utilisateur est renvoyé au calculateur 7. Le choix 1 correspond à la définition d'un intervalle de temps régulier, le choix 2 à une distance fixe parcourue par l'utilisateur et le choix 3 à des points clés du parcours de l'utilisateur, ces correspondances étant indiquées à l'utilisateur sur son terminal 2 par les moyens 3 et/ou 4.

Puis, suite aux étapes E7 et E8, on définit des modalités d'envoi au cours de l'étape E9.

Dans le cas du choix Ch = 1 à l'étape E8, on détermine une valeur temporelle Tc de comparaison égale à une valeur fixe prédéterminée. Cette valeur est fixée par l'utilisateur sur son terminal 2 ou est fixée par défaut, par exemple en fonction du type d'itinéraire choisi au cours de l'étape E6 et/ou du lieu de destination et/ou de départ déterminé. Dans une variante, la valeur est fixée au préalable sur un site Internet de paramétrage du service.

Pour chaque identifiant ID-Ut d'utilisateur, la base 20 alimente en modalités M d'envoi égales, dans le cas Ch=1, à la valeur temporelle Ti associée à l'identifiant IDi d'utilisateur le module 13 de déclenchement, au cours de l'étape suivante E10.

Le module 13 de déclenchement comporte un moyen de comptage de temps, tel qu'une horloge ou autre, pour détecter si le temps écoulé depuis un instant calculé de détermination de localisation atteint la valeur temporelle Tc prédéterminée de comparaison, égale dans le cas du choix Ch = 1 précédent à la valeur fixe Ti. L'instant calculé de détermination de localisation correspond au dernier instant où le véhicule se trouvait en la géolocalisation déterminée au cours de l'étape E3 ou au dernier instant où le véhicule se trouvait en sa localisation de départ déterminée au cours de l'étape E4, ce dernier cas pouvant correspondre à l'un des instants d'exécution des étapes E4, E5, E6, si l'on suppose que le véhicule démarre juste après cet instant.

Lorsque le moyen de comptage du module 13 détecte que la valeur temporelle prescrite Tc de comparaison fournie par la base 20 est atteinte, le module 13 de déclenchement détermine une nouvelle localisation du véhicule en effectuant une estimation de la distance parcourue pendant la valeur temporelle prédéterminée Tc de comparaison sur l'itinéraire calculé par le moteur 12 à partir de la dernière localisation ayant été déterminée, c'est-à-dire dans le cas précédent de la géolocalisation obtenue en l'étape E3 ou de la localisation de départ obtenue en l'étape E4.

Cette détermination de la distance parcourue utilise par exemple une estimation de vitesse en fonction de la dernière localisation déterminée, une base 30 de données répertoriant des vitesses associées à des axes routiers étant par exemple interrogée à cet effet. Cette estimation de vitesse consiste par exemple à supposer que le véhicule roule à une vitesse proche de la vitesse maximum possible en sa dernière localisation déterminée ou de la vitesse maximum autorisée en sa dernière localisation déterminée, qui est par exemple en France de 50 km/h en ville, de 90 km/h ou moins hors agglomération et de 110 km/h sur voie rapide ou de 130 km/h sur autoroute. L'estimation de vitesse peut également être basée sur des statistiques de trafic.

La nouvelle localisation du véhicule déterminée par le module 13 de déclenchement est envoyée au module 10 de guidage, qui génère, à partir de l'itinéraire calculé par le moteur 12 et de cette dernière localisation, un message de guidage pour fourniture via le modules 6 et/ou 8 au terminal 2 et restitution à l'utilisateur. Ce message de guidage contient au moins une information de guidage relative à un itinéraire de véhicule allant de cette nouvelle localisation à au moins une position intermédiaire entre ladite nouvelle localisation et le lieu de destination. Ainsi par exemple, si l'itinéraire calculé par le moteur 12 correspond à un parcours routier joignant les points géographiques A, B, C, D, E, F, G, H, où A et H sont respectivement le lieu de départ et le lieu de destination, et si B est la première nouvelle localisation déterminée par le module 13 de déclenchement, l'information de guidage consistera en une indication de l'itinéraire depuis ce point B jusqu'à un point situé entre le point B et le point H, tel que par exemple C. Pour le choix Ch = 1, la nouvelle localisation B correspond à l'écoulement du temps Tc depuis le point A. De plus, l'information de guidage est volontairement limitée à une information suivant immédiatement la nouvelle localisation déterminée, par exemple du point B au point C, mais pas au-delà, de manière à ne pas donner à l'utilisateur d'informations superflues qui pourraient le tromper ou prêter à confusion. Ainsi, l'information de guidage correspond à une portion de l'itinéraire d'une longueur sensiblement égale à la valeur de vitesse estimée du véhicule, associée à la dernière localisation et multipliée par la valeur temporelle de comparaison Tc.

Puis le processus décrit aux étapes E10 et E11 est recommencé à partir de la dernière localisation déterminée par le module 13 de déclenchement au lieu de l'être à partir de la géolocalisation de l'étape E3 ou de la localisation de départ de l'étape E4.

Ainsi, la deuxième détermination de localisation est effectuée à partir de la première B et permet de déterminer la deuxième localisation C sur l'itinéraire. L'information de guidage contient alors une information permettant d'aller du tronçon C à D sur l'itinéraire.

En variante, plusieurs valeurs temporelles Tc de comparaison successives associées à plusieurs nouvelles localisations successives et plusieurs informations de guidage successives sont prédéterminées par défaut en fonction de l'itinéraire calculé. Ces valeurs temporelles Tc de comparaison correspondent à plusieurs tronçons successifs de l'itinéraire calculé d'une localisation précédente à une localisation suivante et peuvent être différentes les unes des autres. Les localisations ainsi déterminées correspondent par exemple à des points-clés déterminés sur l'itinéraire calculé. Les tronçons d'itinéraire ainsi déterminés peuvent avoir des longueurs différentes.

Dans le cas du choix Ch = 2 à l'étape E8, une valeur de distance Di fixe est prédéterminée puis est enregistrée en association avec le choix Ch = 2 et l'identificateur d'utilisateur IDi dans la base 20 de données au cours de l'étape E9, de manière analogue à la détermination de la valeur temporelle Ti du cas Ch = 1. Cette valeur Di de distance est fixée par l'utilisateur sur son terminal 2 ou est fixée par défaut, par exemple en fonction du type d'itinéraire choisi au cours de l'étape E6 et/ou du lieu de destination et/ou de départ déterminé. En variante, la valeur est fixée au préalable sur un site Internet de paramétrage du service. Par exemple, il pourra être proposé au cours de l'étape E9 à l'utilisateur de choisir une valeur de distance Di faible en ville, par exemple de 1 kilomètre ou de 500 mètres et importante sur autoroute, par exemple de 10 kilomètres, au choix de l'utilisateur. Le module 13 de déclenchement détermine une valeur de vitesse en fonction de la nouvelle localisation déterminée, de manière analogue au cas Ch = 1. Au cours de l'étape E10, le module 13 de déclenchement utilise alors comme valeur temporelle Tc de comparaison la valeur de distance Di divisée par la valeur de vitesse déterminée. La valeur de distance Di correspond par exemple à un nombre de kilomètres que doit parcourir le véhicule. Dans l'exemple précédent du cas Ch = 1, les nouvelles localisations successives A, B, C, D, E, F, G sont équidistantes sur cet itinéraire.

Le choix Ch = 3 à l'étape E8 génère une commande d'acquisition physique automatique de la position géographique réelle du terminal mobile 2. La commande est exécutée par le module 14 pour fournir la localisation L physique de l'utilisateur à des instants déterminés d'acquisition, par exemple périodiques.

Il est prévu une base 40 de données associant à certaines localisations L des points-clés PC à chacun desquels est associée une valeur temporelle de point-clé TPC, ainsi que représenté à la figure 4. Ainsi, dans l'exemple de la figure 4, il n'est pas associé de point-clé PC, ni de valeur temporelle TPC de point-clé à certaines localisations (L1, L2, L4, L5, L7, Ln) ce qui est indiqué par le chiffre zéro, tandis qu'il est associé à chacune des localisations (L3; L6; Lk; Lj) pouvant être fournies par le module 14 respectivement un ou plusieurs points-clés (PCn; PC1, PC1'; PCi+1 et PCi, PCi', PCi") et des valeurs temporelles associées (TPCn; TPC1; TPC1'; TPCi+1; TPCi, TPCi', TPCi"). Il est par exemple associé deux points-clés PC1, PC1' à la localisation L6 et trois points-clés PCi, PCi' et PCi" à la localisation Lj ainsi que leur valeur temporelle associée TPC1, TPC1' et TPCi, TPCi', TPCi". Les valeurs temporelles de point-clé TPC sont des temps estimés de parcours d'un véhicule allant de la localisation L associée au point-clé associé PC, qui sont déterminés au préalable. Le calculateur 7 sélectionne dans la base 40 les points-clés qu'il détermine se trouver sur l'itinéraire calculé par le moteur 12. Puis le calculateur 7 recherche si la localisation acquise L, fournie par le module 14, correspond à un point-clé PC sélectionné.

Ainsi, si la dernière localisation fournie par le module 14 est Lj et que celle-ci correspond dans la base 40 au point-clé PCi sélectionné, la valeur temporelle TPCi correspondante sera alors prise comme valeur temporelle Tc de comparaison dans le module de déclenchement 13 et la nouvelle localisation calculée pour la génération du message de guidage au cours de l'étape E11 sera alors prise comme étant égale au point-clé PCi associé. L'instant de détermination de localisation, à partir duquel l'écoulement de la valeur temporelle Tc de comparaison sera surveillé pour déterminer la nouvelle localisation, est alors pris comme étant égal à l'instant d'acquisition physique de la position géographique réelle Lj du terminal 2.

A la figure 5, la dernière localisation Lj déterminée correspond, sur l'itinéraire de A à H déterminé au préalable par le moteur 12, à un point-clé PCi, qui est situé légèrement en aval de la dernière localisation Lj déterminée et associée dans le sens de parcours de l'itinéraire et qui sera atteint selon l'estimation après le temps TPCi après l'instant de détermination de la dernière localisation Lj. Ainsi, on détecte au passage du véhicule par la localisation Lj qu'il va se trouver après le temps TPCi associé au point-clé géographique PCi. Le point-clé PCi est alors déterminé comme étant la nouvelle localisation. L'information de guidage concerne alors la partie de l'itinéraire allant de la nouvelle localisation PCi à un point intermédiaire situé entre celle-ci et le lieu d'arrivée H, de manière analogue aux cas précédents.

Les points-clés PC de la base 40 sont par exemple déterminés au préalable à partir du terminal 2 par l'utilisateur avant de parcourir l'itinéraire ou sont déterminés par défaut, par exemple en fonction du type d'itinéraire choisi au cours de l'étape E6 et/ou du lieu de destination et/ou de départ déterminé. En variante, les points-clés sont définis au préalable sur un site Internet de paramétrage du service.

Les points-clés correspondent par exemple à des endroits caractéristiques du parcours d'un véhicule tels que par exemple des carrefours, des ronds-points, ou toute autre signalisation routière. Il est ainsi fourni à l'utilisateur une information de guidage à proximité de ces points-clés pour une plus grande efficacité.

En outre, une ou plusieurs localisations, y compris la localisation de départ, peuvent être obtenues par acquisition physique de la position du terminal 2, effectuée par le module 14, pour générer en supplément un autre message de guidage que ceux générés par les choix Ch = 1, Ch = 2, Ch = 3. En variante, l'une ou plusieurs des localisations, y compris la localisation de départ, peuvent être obtenues par acquittement de l'utilisateur, c'est-à-dire à partir de la réponse de l'utilisateur sur le terminal 2 à un message d'interrogation émis depuis le calculateur 7 via la liaison 5 et/ou 9 et reçu sur le terminal 2. Le message d'interrogation peut être limité par exemple à la question de savoir si l'utilisateur se trouve en un endroit déterminé, qui appelle une réponse par oui ou par non. La question peut être posée par le moyen 4 et/ou le moyen 3, de même que l'envoi de la réponse au calculateur 7.

Le calculateur 7 vérifie alors si la dernière localisation ainsi obtenue se trouve sur le dernier itinéraire calculé par le moteur 12 et, dans la négative, provoque un nouveau calcul de l'itinéraire en prenant comme point de départ la dernière localisation obtenue et comme point d'arrivée le lieu de destination déterminé, de manière à corriger l'information de guidage délivrée à l'utilisateur.

L'itinéraire calculé par le moteur 12 comporte des informations géographiques identifiant par exemple la route empruntée et les changements de direction en des carrefours.

Par ailleurs, il peut être prévu que le calculateur sélectionne les informations de guidage qui seront envoyées au terminal 2. Par exemple, le module 10 de guidage comporte un moyen de comparaison des informations d'itinéraire produites par le moteur 12 à la nouvelle localisation produite par le module 13 de déclenchement, pour déterminer si l'information de guidage correspondante devant être produite par le module 10 de guidage est non pertinente ou vide. Une information de guidage non pertinente ou vide est par exemple une information ne signalant aucun changement de direction parmi plusieurs directions possibles, du fait que, sur le tronçon d'itinéraire correspondant, le véhicule ne doit pas bifurquer ou qu'il n'existe pas de carrefours. Le module de guidage élimine alors pour ne pas les envoyer les informations non pertinentes ou vides ainsi trouvées et n'envoie vers le terminal 2 que les informations pertinentes ou non vides. Par exemple, sur autoroute, les informations de guidage ne correspondant pas à un tronçon d'itinéraire avec sortie prévue du véhicule seront éliminées.

Dans une autre mise en oeuvre, le calculateur effectue les trois modes de détermination de nouvelle localisation, par valeur temporelle Tc de comparaison fixe (Ch = 1 ), par valeur de distance Di fixe (Ch = 2) et par points-clés (Ch = 3) à la fois pour produire successivement des nouvelles localisations, chaque nouvelle localisation de chaque mode étant produite lorsque la valeur temporelle Tc de comparaison correspondante est détectée. Le calculateur applique aux informations de guidage produites successivement par ces trois modes de détermination la sélection des informations de guidage pertinentes ou non vides, décrite ci-dessus.

## Revendications

1. Procédé de guidage géographique de l'utilisateur d'un véhicule, dans lequel :
- on spécifie à partir d'un terminal de communication mobile, situé à bord du véhicule, une information de lieu de destination du véhicule,
- on détermine au moins une localisation de départ du terminal de télécommunication mobile,
- on calcule un itinéraire prévu du véhicule de la localisation de départ au lieu de destination à partir d'une base de données géographiques,
- on restitue à l'utilisateur sur le terminal de communication mobile au moins un message de guidage géographique généré au moins à partir de l'itinéraire calculé,
**caractérisé en ce que**, dans un calculateur distant communiquant avec le terminal de télécommunication mobile :
- l'on détecte si le temps écoulé depuis un instant calculé de détermination de localisation atteint une valeur temporelle prédéterminée (Tc) de comparaison,
- en cas de détection de la valeur temporelle prédéterminée (Tc) de comparaison, on détermine une nouvelle localisation du véhicule dépendant de la valeur temporelle prédéterminée (Tc) de comparaison, de l'itinéraire calculé et de la dernière localisation déterminée,
- on génère pour envoi au terminal de communication mobile, à partir de l'itinéraire calculé et de la nouvelle localisation déterminée, le message de guidage contenant au moins une information de guidage relative à une portion de l'itinéraire calculé, allant de la nouvelle localisation à au moins une position intermédiaire entre ladite nouvelle localisation et le lieu de destination.

2. Procédé de guidage suivant la revendication 1, **caractérisé en ce que** la valeur temporelle (Tc) de comparaison est une valeur fixe prédéterminée (Ti).

3. Procédé de guidage suivant la revendication 1 ou 2, **caractérisé en ce que** la nouvelle localisation est déterminée en effectuant une estimation de la distance parcourue pendant la valeur temporelle prédéterminée (Tc) de comparaison sur l'itinéraire calculé à partir de la dernière localisation déterminée.

4. Procédé de guidage suivant la revendication 3, **caractérisé en ce que** ladite distance parcourue est déterminée en utilisant une estimation de vitesse obtenue par interrogation, dans une base (30) de données associant des vitesses à des axes routiers, de l'axe routier sur lequel on détermine que se trouve la dernière localisation déterminée.

5. Procédé de guidage suivant la revendication 1, **caractérisé en ce que** la valeur temporelle (Ti) de comparaison est égale au quotient d'une valeur de distance (Di) fixe prédéterminée par une valeur (Vi) de vitesse prédéterminée en fonction de la dernière localisation.

6. Procédé de guidage suivant la revendication 5, **caractérisé en ce que** ladite valeur de vitesse est obtenue par interrogation, dans une base (30) de données associant des vitesses à des axes routiers, de l'axe routier sur lequel on détermine que se trouve la dernière localisation déterminée.

7. Procédé de guidage suivant la revendication 1, **caractérisé en ce que** :
- l'on détermine une localisation (Lj) par acquisition physique de la position géographique réelle du terminal (2) de télécommunication mobile,
- on sélectionne dans une base (40) de données, associant à des localisations (L) des points-clés (PCi) à chacun desquels est associée une valeur temporelle de point-clé (TPCi), les points-clés se trouvant sur l'itinéraire calculé,
- on recherche si ladite localisation (Lj) acquise correspond à un point-clé (PCi) sélectionné dans la base (40) de données de points-clés, et
- dans l'affirmative, on prédétermine la valeur temporelle (Tc) de comparaison comme étant égale à ladite valeur temporelle (TPCi) de point-clé associée au point-clé (PCi) correspondant, l'instant de détermination de localisation comme étant égal à l'instant d'acquisition physique de la position géographique réelle (Lj) du terminal (2) et on prédétermine la nouvelle localisation comme étant égale au point-clé (PCi) associé.

8. Procédé de guidage selon la revendication 7, **caractérisé en ce que** les valeurs temporelles de point-clé (TPC) sont des temps estimés de parcours d'un véhicule allant de la localisation L associée au point-clé associé (PC), qui sont déterminés au préalable.

9. Procédé de guidage suivant l'une quelconque des revendications précédentes, **caractérisé en ce que** l'on sélectionne les informations de guidage générées à envoyer au terminal (2) de télécommunication mobile.

10. Procédé de guidage suivant la revendication 9, **caractérisé en ce que** pour sélectionner les informations de guidage générées à envoyer au terminal (2) de télécommunication mobile, on compare l'itinéraire calculé à la nouvelle localisation déterminée pour éliminer les informations de guidage correspondantes générées ne signalant aucune bifurcation à effectuer.

11. Procédé de guidage suivant l'une quelconque des revendications 2 à 4, l'une quelconque des revendications 5 et 6, l'une quelconque des revendications 7 et 8 et la revendication 10, **caractérisé en ce que** la nouvelle localisation est déterminée à la fois par le mode (Ch=1) de détermination selon l'une quelconque des revendications 2 à 4, le mode (Ch=2) de détermination selon l'une quelconque des revendications 5 et 6, le mode (Ch=3) de détermination selon l'une quelconque des revendications 7 et 8.

12. Procédé de guidage suivant l'une quelconque des revendications précédentes, **caractérisé en ce que** la valeur (Ti, Di) temporelle ou de distance prédéterminée ou des points-clés (PC) sont prescrits à partir du terminal (2) de télécommunication mobile.

13. Procédé de guidage suivant l'une quelconque des revendications 1 à 12, **caractérisé en ce que** la valeur (Ti, Di) temporelle ou de distance prédéterminée ou des points-clés (PC) sont prescrits par défaut en fonction d'un type d'itinéraire choisi par l'utilisateur sur le terminal (2) de communication mobile et/ou du lieu de destination et/ou de départ déterminé.

14. Procédé de guidage suivant la revendication 1, **caractérisé en ce que** plusieurs valeurs (Tc) temporelles de comparaison successives associées à plusieurs nouvelles localisations successives et plusieurs informations de guidage successives sont prescrites par défaut en fonction de l'itinéraire calculé.

15. Procédé de guidage suivant l'une quelconque des revendications 1 à 9, **caractérisé en ce que** la valeur (Ti, Di) temporelle ou de distance prédéterminée ou des points-clés (PC) sont prescrits au préalable par l'utilisateur sur un site Internet de paramétrage du service.

16. Procédé de guidage suivant l'une quelconque des revendications 1 à 9, **caractérisé en ce que** la valeur (Ti, Di) temporelle ou de distance prédéterminée ou des points-clés (PC) sont prescrits au préalable par l'utilisateur sur un serveur vocal interactif (8).

17. Procédé de guidage suivant l'une quelconque des revendications 2 à 4, l'une quelconque des revendications 5 et 6, l'une quelconque des revendications 7 et 8, la revendication 13 et la revendication 14, **caractérisé en ce que** l'on prévoit sur le terminal (2) de télécommunication mobile une fonction (E8, E9) de choix (Ch) de mode de détermination de la nouvelle localisation parmi le mode (Ch=1) de détermination selon l'une quelconque des revendications 2 à 4, le mode (Ch=2) de détermination selon l'une quelconque des revendications 5 et 6, le mode (Ch=3) de détermination selon l'une quelconque des revendications 7 et 8, le mode de détermination selon la revendication 13 et le mode de détermination selon la revendication 14.

18. Procédé de guidage selon l'une quelconque des revendications précédentes, **caractérisé en ce que** l'information de guidage correspond à une portion de l'itinéraire calculé d'une longueur sensiblement égale à une valeur de vitesse estimée du véhicule multipliée par la valeur temporelle prédéterminée de comparaison, associée à la nouvelle localisation, ladite vitesse estimée étant obtenue par interrogation, dans une base (30) de données associant des vitesses à des axes routiers, de l'axe routier sur lequel on détermine que se trouve la dernière localisation déterminée.

19. Procédé de guidage selon l'une quelconque des revendications précédentes, **caractérisé en ce que** l'on génère en outre un autre message de guidage pour ledit envoi au terminal (2) de télécommunication mobile, à partir de l'itinéraire calculé et d'une nouvelle localisation du véhicule, obtenue par acquisition de la position géographique réelle du terminal (2) de télécommunication mobile.

20. Procédé de guidage selon l'une quelconque des revendications précédentes, lorsqu'elles dépendent au moins de la revendication 7 ou 19, **caractérisé en ce que** le terminal (2) de télécommunication mobile est un terminal téléphonique cellulaire, et l'acquisition physique de la position géographique réelle du terminal (2) de télécommunication mobile est effectuée par identification (15) de la cellule du réseau cellulaire dans laquelle se trouve le terminal (2) de télécommunication mobile.

21. Procédé de guidage selon l'une quelconque des revendications précédentes, **caractérisé en ce que** l'on génère en outre un autre message de guidage pour ledit envoi au terminal (2) de télécommunication mobile, à partir d'une nouvelle localisation du véhicule, obtenue à partir de la réponse de l'utilisateur sur le terminal (2) de télécommunication mobile à un message d'interrogation de position émis depuis le calculateur.

22. Procédé de guidage selon l'une quelconque des revendications précédentes, **caractérisé en ce que** le terminal (2) de télécommunication mobile est un terminal téléphonique mobile.

23. Procédé de guidage selon l'une quelconque des revendications précédentes, **caractérisé en ce que** le terminal (2) de télécommunication mobile est un terminal téléphonique mobile du type GPRS.

24. Procédé de guidage selon l'une quelconque des revendications précédentes, **caractérisé en ce que** le message de guidage est restitué vocalement sur le terminal (2) de télécommunication mobile.

25. Procédé de guidage selon l'une quelconque des revendications précédentes, **caractérisé en ce que** le message de guidage est restitué visuellement sur le terminal (2) de télécommunication mobile.

26. Système de guidage géographique de l'utilisateur d'un véhicule, pour la mise en oeuvre du procédé de guidage selon l'une quelconque des revendications précédentes, le système de guidage comprenant :
- un moyen de réception d'une information de lieu de destination du véhicule spécifiée à partir du terminal (2) de télécommunication mobile situé à bord du véhicule,
- un moyen de détermination d'au moins une localisation de départ du terminal (2) de télécommunication mobile,
- un moyen de calcul d'un itinéraire prévu du véhicule de la localisation de départ au lieu de destination, à partir d'une base de données géographiques,
- un moyen de génération d'au moins un message de guidage géographique sur le terminal (2) de télécommunication mobile,
**caractérisé en ce qu'**il comporte, dans un calculateur distant communiquant avec le terminal de télécommunication mobile :
- un moyen pour détecter si le temps écoulé depuis un instant calculé de détermination de localisation atteint une valeur temporelle (Tc) prédéterminée de comparaison,
- un moyen de détermination, en cas de détection de ladite valeur temporelle prédéterminée (Tc) de comparaison, d'une nouvelle localisation du véhicule dépendant de la valeur temporelle prédéterminée (Tc) de comparaison, de l'itinéraire calculé et de la dernière localisation déterminée,
- le moyen de génération étant tel qu'il génère, pour envoi au terminal de communication mobile, à partir de l'itinéraire calculé et de la nouvelle localisation déterminée, le message de guidage contenant au moins une information de guidage relative à une portion de l'itinéraire calculé, allant de la nouvelle localisation à au moins une position intermédiaire entre ladite nouvelle localisation et le lieu de destination.

## Claims

1. Method for geographical guidance of the user of a vehicle, in which:
- an information regarding the place of destination of the vehicle is specified from a mobile communication terminal situated aboard the vehicle,
- at least one departure location of the mobile telecommunication terminal is determined,
- a planned route of the vehicle from the departure location to the place of destination is computed on the basis of a geographical database,
- at least one geographical guidance message generated at least on the basis of the computed route is issued to the user on the mobile communication terminal, **characterized in that**, in a remote computer communicating with the mobile telecommunication terminal:
- it is detected whether the time elapsed since a computed instant of determination of location attains a predetermined temporal comparison value (Tc),
- in case of detection of the predetermined temporal comparison value (Tc), a new location of the vehicle is determined, dependent on the predetermined temporal comparison value (Tc), on the computed route and on the last determined location,
- the guidance message containing at least one guidance information relating to a portion of the computed route, going from the new location to at least one intermediate position between said new location and the place of destination, is generated for dispatch to the mobile communication terminal, on the basis of the computed route and of the new location determined.

2. Guidance method in accordance with Claim 1, **characterized in that** the temporal comparison value (Tc) is a predetermined fixed value (Ti).

3. Guidance method in accordance with Claim 1 or 2, **characterized in that** the new location is determined by performing an estimation of the distance travelled during the predetermined temporal comparison value (Tc) over the computed route from the last location determined.

4. Guidance method in accordance with Claim 3, **characterized in that** said distance travelled is determined by using a speed estimation obtained by interrogation, in a data base (30) associating speeds with roadways, of the roadway on which it is determined that the last location determined is situated.

5. Guidance method in accordance with Claim 1, **characterized in that** the temporal comparison value (Tc) is equal to the quotient of a fixed distance value (Di) predetermined by a value (Vi) of speed predetermined as a function of the last location.

6. Guidance method in accordance with Claim 5, **characterized in that** said speed value is obtained by interrogation, in a data base (30) associating speeds with roadways, of the roadway on which it is determined that the last location determined is situated.

7. Guidance method in accordance with Claim 1, **characterized in that**:
- a location (Lj) is determined by physical acquisition of the real geographical position of the mobile telecommunication terminal (2),
- the key-points situated on the computed route are selected from a data base (40), associating key-points (PCi), with each of which a key-point temporal value (TPCi), is associated with locations (L),
- a search is conducted to ascertain whether said acquired location (Lj) corresponds to a key-point (PCi) selected from the data base (40) of key-points, and
- in the affirmative, the temporal comparison value (Tc) is predetermined as being equal to said key-point temporal value (TPCi) associated with the corresponding key-point (PCi), the instant of determination of location is predetermined as being equal to the instant of physical acquisition of the real geographical position (Lj) of the terminal (2) and the new location is predetermined as being equal to the associated key-point (PCi).

8. Guidance method according to Claim 7, **characterized in that** the key-point temporal values (TPCi) are estimated travel times of a vehicle going from the location L associated with the associated key-point (PC) and are determined beforehand.

9. Guidance method in accordance with any one of the preceding claims, **characterized in that** the guidance informations generated to be dispatched to the mobile telecommunication terminal (2) are selected.

10. Guidance method in accordance with Claim 9, **characterized in that**, to select the guidance informations generated to be dispatched to the mobile telecommunication terminal (2), the computed route is compared with the new location determined so as to eliminate the corresponding guidance informations generated that do not signal any branching-off to be performed.

11. Guidance method in accordance with any one of Claims 2 to 4, either of Claims 5 and 6, either of Claims 7 and 8 and Claim 10, **characterized in that** the new location is determined at one and the same time by the mode (Ch=1) of determination according to any one of Claims 2 to 4, the mode (Ch=2) of determination according to either of Claims 5 and 6, the mode (Ch=3) of determination according to either of Claims 7 and 8.

12. Guidance method in accordance with any one of the preceding claims, **characterized in that** the temporal or predetermined distance value (Ti, Di) or key-points (PC) are set from the mobile telecommunication terminal (2).

13. Guidance method in accordance with any one of Claims 1 to 12, **characterized in that** the temporal or predetermined distance value (Ti, Di) or key-points (PC) are set by default as a function of a type of route chosen by the user on the mobile communication terminal (2) and/or of the place of destination and/or of departure determined.

14. Guidance method in accordance with Claim 1, **characterized in that** several successive temporal comparison values (Tc) associated with several successive new locations and several successive guidance information are set by default as a function of the computed route.

15. Guidance method in accordance with any one of Claims 1 to 9, **characterized in that** the temporal or predetermined distance value (Ti, Di) or key-points (PC) are set beforehand by the user on a parametrization Internet site for the service.

16. Guidance method in accordance with any one of Claims 1 to 9, **characterized in that** the temporal or predetermined distance value (Ti, Di) or key-points (PC) are set beforehand by the user on an interactive voice server (8).

17. Guidance method in accordance with any one of Claims 2 to 4, either of Claims 5 and 6, either of Claims 7 and 8, Claim 13 and Claim 14, **characterized in that** provision is made on the mobile telecommunication terminal (2) for a function (E8, E9) for choosing (Ch) mode of determination of the new location from among the mode (Ch=1) of determination according to any one of Claims 2 to 4, the mode (Ch=2) of determination according to either of Claims 5 and 6, the mode (Ch=3) of determination according to either of Claims 7 and 8, the mode of determination according to Claim 13 and the mode of determination according to Claim 14.

18. Guidance method according to any one of the preceding claims, **characterized in that** the guidance information corresponds to a portion of the computed route of a length substantially equal to an estimated speed value of the vehicle multiplied by the predetermined temporal comparison value, associated with the new location, said estimated speed being obtained by interrogation, in a data base (30) associating speeds with roadways, of the roadway on which it is determined that the last location determined is situated.

19. Guidance method according to any one of the preceding claims, **characterized in that** another guidance message for said dispatch to the mobile telecommunication terminal (2) is furthermore generated, on the basis of the computed route and of a new location of the vehicle, obtained by acquisition of the real geographical position of the mobile telecommunication terminal (2).

20. Guidance method according to any one of the preceding claims, when dependent at least on Claim 7 or 19, **characterized in that** the mobile telecommunication terminal (2) is a cellular telephonic terminal, and the physical acquisition of the real geographical position of the mobile telecommunication terminal (2) is performed by identification (15) of the cell of the cellular network in which the mobile telecommunication terminal (2) is situated.

21. Guidance method according to any one of the preceding claims, **characterized in that** another guidance message for said dispatch to the mobile telecommunication terminal (2) is furthermore generated, on the basis of a new location of the vehicle, obtained on the basis of the response of the user on the mobile telecommunication terminal (2) to a position interrogation message sent from the computer.

22. Guidance method according to any one of the preceding claims, **characterized in that** the mobile telecommunication terminal (2) is a mobile telephonic terminal.

23. Guidance method according to any one of the preceding claims, **characterized in that** the mobile telecommunication terminal (2) is a mobile telephonic terminal of the GPRS type.

24. Guidance method according to any one of the preceding claims, **characterized in that** the guidance message is issued as a voice message on the mobile telecommunication terminal (2).

25. Guidance method according to any one of the preceding claims, **characterized in that** the guidance message is issued visually on the mobile telecommunication terminal (2).

26. System for geographical guidance of the user of a vehicle, for the implementation of the guidance method according to any one of the preceding claims, the guidance system comprising:
- a means for receiving an information regarding the vehicle's place of destination specified from the mobile telecommunication terminal (2) situated aboard the vehicle,
- a means for determining at least one departure location of the mobile telecommunication terminal (2),
- a means for computing a planned route of the vehicle from the departure location to the place of destination, on the basis of a geographical database,
- a means for generating at least one geographical guidance message on the mobile telecommunication terminal (2),
**characterized in that** it comprises, in a remote computer communicating with the mobile telecommunication terminal:
- a means for detecting whether the time elapsed since a computed instant of determination of location attains a predetermined temporal comparison value (Tc),
- a means for determining, in case of detection of said predetermined temporal comparison value (Tc), a new location of the vehicle dependent on the predetermined temporal comparison value (Tc), on the computed route and on the last location determined,
- the generating means being such that it generates, for dispatch to the mobile communication terminal, on the basis of the computed route and of the new location determined, the guidance message containing at least one guidance information relating to a portion of the computed route, going from the new location to at least one intermediate position between said new location and the place of destination.

## Patentansprüche

1. Verfahren zur geographischen Zielführung des Nutzers eines Fahrzeugs, bei dem:
- ausgehend von einem an Bord des Fahrzeugs befindlichen mobilen Kommunikationsendgerät eine Information über den Bestimmungsort des Fahrzeugs spezifiziert wird,
- mindestens ein Ausgangsstandort des mobilen Telekommunikationsendgeräts bestimmt wird,
- eine vorgesehene Route des Fahrzeugs vom Ausgangsstandort zum Bestimmungsort ausgehend von einer geographischen Datenbank berechnet wird,
- für den Nutzer auf dem mobilen Kommunikationsendgerät mindestens eine geographische Zielführungsmitteilung wiedergegeben wird, die mindestens ausgehend von der berechneten Route erzeugt wird,
**dadurch gekennzeichnet, dass** in einem fernen Rechner, der mit dem mobilen Telekommunikationsendgerät in Verbindung steht:
- erfasst wird, ob die seit einem berechneten Standortbestimmungszeitpunkt vergangene Zeit einen vorbestimmten Vergleichszeitwert (Tc) erreicht,
- im Fall der Erfassung des vorbestimmten Vergleichszeitwerts (Tc) ein neuer Standort des Fahrzeugs bestimmt wird, der von dem vorbestimmten Vergleichszeitwert (Tc), der berechneten Route und dem letzten bestimmten Standort abhängt,
- zum Senden an das mobile Kommunikationsendgerät ausgehend von der berechneten Route und dem neuen bestimmten Standort die Zielführungsmitteilung erzeugt wird, die mindestens eine Zielführungsinformation bezüglich eines Abschnitts der berechneten Route enthält, der von dem neuen Standort bis zu mindestens einer Zwischenposition zwischen dem neuen Standort und dem Bestimmungsort geht.

2. Zielführungsverfahren nach Anspruch 1, **dadurch gekennzeichnet, dass** der Vergleichszeitwert (Tc) ein vorbestimmter Festwert (Ti) ist.

3. Zielführungsverfahren nach Anspruch 1 oder 2, **dadurch gekennzeichnet, dass** der neue Standort mittels Durchführung einer Schätzung der während des vorbestimmten Vergleichszeitwerts (Tc) auf der berechneten Route ab dem letzten bestimmten Standort zurückgelegten Strecke bestimmt wird.

4. Zielführungsverfahren nach Anspruch 3, **dadurch gekennzeichnet, dass** die zurückgelegte Strecke unter Verwendung einer Geschwindigkeitsschätzung bestimmt wird, die durch Abfrage der Fernverkehrsstraße, von der bestimmt wird, dass sich der letzte bestimmte Standort auf ihr befindet, in einer Fernverkehrsstraßen Geschwindigkeiten zuordnenden Datenbank (30) erhalten wird.

5. Zielführungsverfahren nach Anspruch 1, **dadurch gekennzeichnet, dass** der Vergleichszeitwert (Tc) gleich dem Quotient eines vorbestimmten festen Streckenwerts (Di) durch einen vorbestimmten Geschwindigkeitswert (Vi) abhängig vom letzten Standort ist.

6. Zielführungsverfahren nach Anspruch 5, **dadurch gekennzeichnet, dass** der Geschwindigkeitswert durch Abfrage, in einer Fernverkehrsstraßen Geschwindigkeiten zuordnenden Datenbank (30), der Fernverkehrsstraße erhalten wird, von der bestimmt wird, dass sich der letzte bestimmte Standort auf ihr befindet.

7. Zielführungsverfahren nach Anspruch 1, **dadurch gekennzeichnet, dass**:
- ein Standort (Lj) durch physikalische Erfassung der realen geographischen Position des mobilen Telekommunikationsendgeräts (2) bestimmt wird,
- in einer Datenbank (40), die Standorten (L) Schlüsselpunkte (PCi) zuordnet, jedem von denen ein Schlüsselpunkt-Zeitwert (TPCi) zugeordnet ist, die Schlüsselpunkte ausgewählt werden, die sich auf der berechneten Route befinden,
- nachgeforscht wird, ob der erfasste Standort (Lj) einem aus der Datenbank (40) von Schlüsselpunkten ausgewählten Schlüsselpunkt (PCi) entspricht, und
- wenn ja, der Vergleichszeitwert (Tc) als gleich dem dem entsprechenden Schlüsselpunkt (PCi) zugeordneten Schlüsselpunkt-Zeitwert (TPCi), der Zeitpunkt der Standortbestimmung als gleich dem Zeitpunkt der physikalischen Erfassung der realen geographischen Position (Lj) des Endgeräts (2) vorherbestimmt werden, und der neue Standort als gleich dem zugeordneten Schlüsselpunkt (PCi) vorherbestimmt wird.

8. Zielführungsverfahren nach Anspruch 7, **dadurch gekennzeichnet, dass** die Schlüsselpunkt-Zeitwerte (TPCi) geschätzte Streckenzeiten eines Fahrzeugs sind, das von dem zugeordneten Standort L zum zugeordneten Schlüsselpunkt (PC) geht, die vorab bestimmt werden.

9. Zielführungsverfahren nach einem der vorhergehenden Ansprüche, **dadurch gekennzeichnet, dass** die an das mobile Telekommunikationsendgerät (2) zu sendenden erzeugten Zielführungsinformationen ausgewählt werden.

10. Zielführungsverfahren nach Anspruch 9, **dadurch gekennzeichnet, dass**, zur Auswahl der an das mobile Telekommunikationsendgerät (2) zu sendenden erzeugten Zielführungsinformationen, die berechnete Route mit dem neuen bestimmten Standort verglichen wird, um die erzeugten entsprechenden Zielführungsinformationen zu entfernen, die keine durchzuführende Abzweigung anzeigen.

11. Zielführungsverfahren nach einem der Ansprüche 2 bis 4, einem der Ansprüche 5 und 6, einem der Ansprüche 7 und 8 und Anspruch 10, **dadurch gekennzeichnet, dass** der neue Standort zugleich durch den Bestimmungsmodus (Ch=1) nach einem der Ansprüche 2 bis 4, den Bestimmungsmodus (Ch=2) nach einem der Ansprüche 5 und 6, den Bestimmungsmodus (Ch=3) nach einem der Ansprüche 7 und 8 bestimmt wird.

12. Zielführungsverfahren nach einem der vorhergehenden Ansprüche, **dadurch gekennzeichnet, dass** der vorbestimmte Zeit- oder der Streckenwert (Ti, Di) oder Schlüsselpunkte (PC) ausgehend vom mobilen Telekommunikationsendgerät (2) vorgegeben werden.

13. Zielführungsverfahren nach einem der Ansprüche 1 bis 12, **dadurch gekennzeichnet, dass** der vorbestimmte Zeit- oder Streckenwert (Ti, Di) oder Schlüsselpunkte (PC) standardmäßig abhängig von der Art einer vom Nutzer gewählten Route auf dem mobilen Kommunikationsendgerät (2) und/oder vom bestimmten Bestimmungs- und/oder Ausgangsort vorgegeben werden.

14. Zielführungsverfahren nach Anspruch 1, **dadurch gekennzeichnet, dass** mehrere aufeinanderfolgende Vergleichszeitwerte (Tc), die mehreren neuen aufeinanderfolgenden Standorten zugeordnet sind, und mehrere aufeinanderfolgende Zielführungsinformationen standardmäßig abhängig von der berechneten Route vorgegeben werden.

15. Zielführungsverfahren nach einem der Ansprüche 1 bis 9, **dadurch gekennzeichnet, dass** der vorbestimmte Zeit- oder Streckenwert (Ti, Di) oder Schlüsselpunkte (PC) vorab durch den Nutzer auf einer Dienstparametrierungs-Webseite vorgegeben werden.

16. Zielführungsverfahren nach einem der Ansprüche 1 bis 9, **dadurch gekennzeichnet, dass** der vorbestimmte Zeit- oder Streckenwert (Ti, Di) oder Schlüsselpunkte (PC) vorab vom Nutzer auf einem interaktiven Sprachserver (8) vorgegeben werden.

17. Zielführungsverfahren nach einem der Ansprüche 2 bis 4, einem der Ansprüche 5 und 6, einem der Ansprüche 7 und 8, Anspruch 13 und Anspruch 14, **dadurch gekennzeichnet, dass** auf dem mobilen Telekommunikationsendgerät (2) eine Funktion (E8, E9) der Wahl (Ch) des Bestimmungsmodus des neuen Standorts unter dem Bestimmungsmodus (Ch=1) nach einem der Ansprüche 2 bis 4, dem Bestimmungsmodus (Ch=2) nach einem der Ansprüche 5 und 6, dem Bestimmungsmodus (Ch=3) nach einem der Ansprüche 7 und 8, dem Bestimmungsmodus nach Anspruch 13 und dem Bestimmungsmodus nach Anspruch 14 vorgesehen wird.

18. Zielführungsverfahren nach einem der vorhergehenden Ansprüche, **dadurch gekennzeichnet, dass** die Zielführungsinformation einem berechneten Abschnitt der Route einer Länge im Wesentlichen gleich einem geschätzten Geschwindigkeitswert des Fahrzeugs multipliziert mit dem vorbestimmten Vergleichszeitwert entspricht, der dem neuen Standort zugeordnet ist, wobei die geschätzte Geschwindigkeit durch die Abfrage, in einer Fernverkehrsstraßen Geschwindigkeiten zuordnenden Datenbank (30), der Fernverkehrsstraße erhalten wird, von der bestimmt wird, dass sich der letzte bestimmte Standort auf ihr befindet.

19. Zielführungsverfahren nach einem der vorhergehenden Ansprüche, **dadurch gekennzeichnet, dass** außerdem eine weitere Zielführungsmitteilung zum Senden an das mobile Telekommunikationsendgerät (2) ausgehend von der berechneten Route und einem neuen Standort des Fahrzeugs erzeugt wir, der durch Erfassung der realen geographischen Position des mobilen Telekommunikationsendgeräts (2) erhalten wird.

20. Zielführungsverfahren nach einem der vorhergehenden Ansprüche, wenn sie mindestens von Anspruch 7 oder 19 abhängen, **dadurch gekennzeichnet, dass** das mobile Telekommunikationsendgerät (2) ein zellulares Telefonendgerät ist, und die physikalische Erfassung der realen geographischen Position des mobilen Telekommunikationsendgeräts (2) durch die Erkennung (15) der Zelle des zellularen Netzes durchgeführt wird, in dem sich das mobile Telekommunikationsendgerät (2) befindet.

21. Zielführungsverfahren nach einem der vorhergehenden Ansprüche, **dadurch gekennzeichnet, dass** außerdem eine weitere Zielführungsmitteilung zum Senden an das mobile Telekommunikationsendgerät (2) ausgehend von einem neuen Standort des Fahrzeugs erzeugt wird, der ausgehend von der Antwort des Nutzers auf dem mobilen Telekommunikationsendgerät (2) auf eine Positionsabfragemitteilung erhalten wird, die vom Rechner gesendet wird.

22. Zielführungsverfahren nach einem der vorhergehenden Ansprüche, **dadurch gekennzeichnet, dass** das mobile Telekommunikationsendgerät (2) ein mobiles Telefonendgerät ist.

23. Zielführungsverfahren nach einem der vorhergehenden Ansprüche, **dadurch gekennzeichnet, dass** das mobile Telekommunikationsendgerät (2) ein mobiles Telefonendgerät vom Typ GPRS ist.

24. Zielführungsverfahren nach einem der vorhergehenden Ansprüche, **dadurch gekennzeichnet, dass** die Zielführungsmitteilung vokal auf dem mobilen Telekommunikationsendgerät (2) wiedergegeben wird.

25. Zielführungsverfahren nach einem der vorhergehenden Ansprüche, **dadurch gekennzeichnet, dass** die Zielführungsmitteilung visuell auf dem mobilen Telekommunikationsendgerät (2) wiedergegeben wird.

26. System zur geographischen Zielführung des Nutzers eines Fahrzeugs zur Durchführung des Zielführungsverfahrens nach einem der vorhergehenden Ansprüche, wobei das Zielführungsverfahren enthält:
- eine Einrichtung zum Empfang einer spezifizierten Bestimmungsortinformation des Fahrzeugs ausgehend vom an Bord des Fahrzeugs befindlichen mobilen Telekommunikationsendgerät (2) ,
- eine Einrichtung zur Bestimmung mindestens eines Ausgangsstandorts des mobilen Telekommunikationsendgeräts (2),
- eine Einrichtung zur Berechnung einer vorgesehenen Route des Fahrzeugs vom Ausgangsstandort zum Bestimmungsort, ausgehend von einer geographischen Datenbank,
- eine Einrichtung zur Erzeugung mindestens einer geographischen Zielführungsmitteilung auf dem mobilen Telekommunikationsendgerät (2),
**dadurch gekennzeichnet, dass** es in einem fernen Rechner, der mit dem mobilen Telekommunikationsendgerät in Verbindung steht, aufweist:
- eine Einrichtung, um zu erfassen, ob die seit einem berechneten Standortbestimmungszeitpunkt vergangene Zeit einen vorbestimmten Vergleichszeitwert (Tc) erreicht,
- eine Einrichtung zur Bestimmung, im Fall der Erfassung des vorbestimmten Vergleichszeitwerts (Tc), eines neuen Standorts des Fahrzeugs abhängig von dem vorbestimmten Vergleichszeitwert (Tc), der berechneten Route und dem letzten bestimmten Standort,
- wobei die Erzeugungseinrichtung so ist, dass sie, zum Senden an das mobile Kommunikationsendgerät, ausgehend von der berechneten Route und dem neuen bestimmten Standort, die Zielführungsmitteilung erzeugt, die mindestens eine Zielführungsmitteilung bezüglich eines Abschnitts der berechneten Route enthält, der vom neuen Standort zu mindestens einer Zwischenposition zwischen dem neuen Standort und dem Bestimmungsort geht.
